# EUROPEAN PATENT APPLICATION

(11) **EP 2 690 600 A1**
(43) Date of publication of application: **29.01.2014**
(21) Application number: 12305903.2
(22) Date of filing: 24.07.2012
(51) Int. Cl.: G06T 19/20

(54) **Multi-selection in an immersive virtual environment**

(71) Applicant: Dassault Systèmes, 78140 Velizy Villacoublay (FR)
(72) Inventor: Arrighi, Pierre-Antoine, 75015 Paris (FR)
(74) Representative: Hirsch & Associés

(57) **Abstract**

It is provided a computer-implemented method of three-dimensional design in an immersive virtual environment. The method comprises the steps of representing (S10) a plurality of objects in the virtual environment to a physical designer, at least the hands of the physical designer being instantiated in the virtual environment; calling (S20) a multi-selection, upon detection of a first body configuration of the physical designer; and adding (S30) an object to the multi-selection, upon detection of a second body configuration of the physical designer, the second body configuration controlling an interaction of the instantiation of the hands of the physical designer with the object.

Such a method improves the design of an object.

## Description

### FIELD OF THE INVENTION

The invention relates to the field of computer programs and systems, and more specifically to a method, system and program for three-dimensional design in an immersive virtual environment.

### BACKGROUND

A number of systems and programs are offered on the market for the design, the engineering and the manufacturing of objects. CAD is an acronym for Computer-Aided Design, e.g. it relates to software solutions for designing an object. CAE is an acronym for Computer-Aided Engineering, e.g. it relates to software solutions for simulating the physical behavior of a future product. CAM is an acronym for Computer-Aided Manufacturing, e.g. it relates to software solutions for defining manufacturing processes and operations. In such systems, the graphical user interface (GUI) plays an important role as regards the efficiency of the technique. These techniques may be embedded within Product Lifecycle Management (PLM) systems. PLM refers to a business strategy that helps companies to share product data, apply common processes, and leverage corporate knowledge for the development of products from conception to the end of their life, across the concept of extended enterprise.

The PLM solutions provided by Dassault Systemes (under the trademarks CATIA, ENOVIA and DELMIA) provide an Engineering Hub, which organizes product engineering knowledge, a Manufacturing Hub, which manages manufacturing engineering knowledge, and an Enterprise Hub which enables enterprise integrations and connections into both the Engineering and Manufacturing Hubs. All together the system delivers an open object model linking products, processes, resources to enable dynamic, knowledge-based product creation and decision support that drives optimized product definition, manufacturing preparation, production and service.

In CAD, the user (e.g. a designer) is provided with a scene where a plurality of objects are represented. The user may then assemble the objects, or perform design operations on the objects. CAD systems usually provide interaction with the objects for performing such actions via a graphical user interface (GUI) comprising a haptic device, such as a mouse, controlling a cursor, and/or a keyboard. Touchpads and multi-touch technology are also used. The specific operation of multi-selecting objects of the scene may thus be implemented via such GUI, e.g. through the call of a multi-selection function provided by some CAD software. However, no CAD system provides an easy way to perform multi-selection, notably in a three-dimensional (3D) context.

Thus, the existing solutions lack efficiency, notably from a user utilization point of view. Within this context, there is still a need for an improved solution for designing an object.

### SUMMARY OF THE INVENTION

According to one aspect, it is therefore provided a computer-implemented method of three-dimensional design in an immersive virtual environment. The method comprises the step of representing a plurality of objects in the virtual environment to a physical designer. At least the hands of the physical designer are instantiated in the virtual environment. The method also comprises the step of calling a multi-selection, upon detection of a first body configuration of the physical designer. And the method also comprises adding an object to the multi-selection, upon detection of a second body configuration of the physical designer. The second body configuration controls an interaction of the instantiation of the hands of the physical designer with the object.

The method may comprise one or more of the following:
- the multi-selection is a previously saved selection or a newly created selection;
- while keeping the first body configuration, the step of adding an object to the multi-selection is repeated;
- the physical designer achieves the first body configuration with one hand and the second body configuration with the other hand;
- the method further comprises, while keeping the first body configuration, performing a drag-and-drop with a grab-and-relax gesture with the other hand, thereby duplicating the multi-selection;
- the method further comprises, after or while leaving the first body configuration, performing a drag-and-drop with a grab-and-relax gesture with the other hand, thereby moving the multi-selection; and/or
- the first body configuration is a closed fist position and/or the second body configuration is a pinch gesture.

It is further proposed a computer program comprising instructions for performing the above method.

It is further proposed a computer readable storage medium having recorded thereon the above computer program.

It is further proposed a CAD system comprising a processor coupled to a memory and a virtual immersion interface, the memory having recorded thereon the above computer program.

### BRIEF DESCRIPTION OF THE DRAWINGS

Embodiments of the invention will now be described, by way of non-limiting example, and in reference to the accompanying drawings, where:
- FIG. 1 shows a flowchart of an example of the method;
- FIG. 2 shows an example of a client system; and
- FIGS. 3-27 show an example of performing the method with an example of the system.

### DETAILED DESCRIPTION OF THE INVENTION

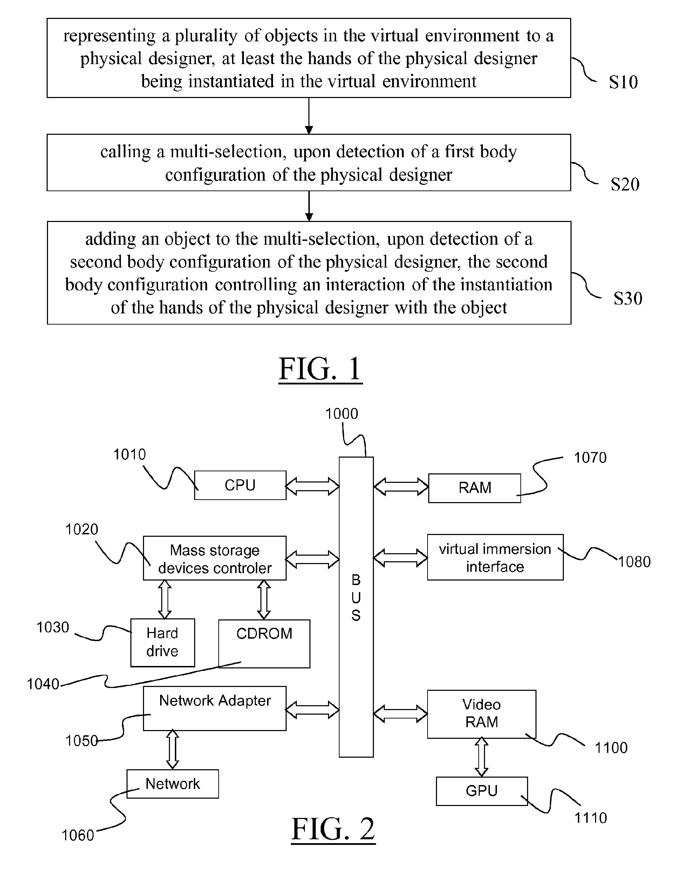

FIG. 1 shows a flowchart of an example of the computer-implemented method of three-dimensional (3D) design in an immersive virtual environment. The method comprise a step of representing (S10) a plurality of objects in the virtual environment to a physical designer. (At least) the hands of the physical designer are instantiated in the virtual environment. The method comprises calling (S20) a multi-selection. The calling (S20) is performed upon the detection of a first body configuration of the physical designer. Then, the method comprises adding (S30) an object to the multi-selection. The adding (S30) is performed upon the detection of a second body configuration of the physical designer. The second body configuration controls an interaction of the instantiation of the hands of the physical designer with the object (i.e. the object to be added at step S30).

Such a method improves the field of 3D design, by being more user-friendly and thus allowing a faster design, thanks to the instantiation of the hands of the physical designer in a virtual environment and the fact that one can call a multi-selection and add an object to the multi-selection via body configurations.

Notably, the method may be for the purpose of designing a 3D modeled object e.g. that represents a part (e.g. a mechanical part). The multi-selection may indeed be later used for such design of a 3D modeled object. The plurality of objects represented at step S10 may themselves be 3D modeled objects comprising at least one part and/or at least one tool.

A modeled object is any object defined by data stored in a memory of a computer system. By extension, the expression "modeled object" designates the data itself. "Designing a 3D modeled object" designates any action or series of actions which is at least part of a process of elaborating a 3D modeled object. Thus, the method may comprise creating a 3D modeled object from scratch. Alternatively, the method may comprise providing a 3D modeled object previously created, and then modifying the 3D modeled object.

The 3D modeled object may be a CAD modeled object or a part of a CAD modeled object. In any case, the 3D modeled object designed by the method may represent the CAD modeled object or at least part of it, e.g. a 3D space occupied by the CAD modeled object, e.g. in the virtual environment. A CAD modeled object is any object defined by data stored in a memory of a CAD system. According to the type of the system, the modeled objects may be defined by different kinds of data. A CAD system is any system suitable at least for designing a modeled object on the basis of a graphical representation of the modeled object, such as CATIA. Thus, the data defining a CAD modeled object comprise data allowing the representation of the modeled object (e.g. geometric data, for example including relative positions in space, e.g. for positioning and representing the modeled object in the virtual environment according to the instantiation of the physical designer, e.g. its position).

The method may be included in a manufacturing process, which may comprise, after performing the method, outputting data for the production of a physical product corresponding to the modeled object and/or producing a physical product corresponding to the modeled object. In any case, the modeled object designed by the method may represent a manufacturing object. The modeled object may thus be a modeled solid (i.e. a modeled object that represents a solid). The manufacturing object may be a product, such as a part, or an assembly of parts. Because the method improves the design of the modeled object, the method also improves the manufacturing of a product and thus increases productivity of the manufacturing process. The method can be implemented using a CAM system. A CAM system is any system suitable at least for defining, simulating and controlling manufacturing processes and operations.

The method is computer-implemented. This means that the method is executed on at least one computer or any system alike (i.e. with a processing unit and a memory). For example, the method may be implemented on a CAD system. Thus, steps of the method are performed by the computer, possibly fully automatically, or, semi-automatically (e.g. steps which are triggered by the user and/or steps which involve user-interaction, as explained later).

A typical example of computer-implementation of the method is to perform the method with a system suitable for this purpose. The system may comprise a memory having recorded thereon instructions for performing the method. In other words, software is already ready on the memory for immediate use. The system is thus suitable/adapted for performing the method without installing any other software. Such a system may also comprise at least one processor coupled with the memory for executing the instructions. In other words, the system comprises instructions coded on a memory coupled to the processor, the instructions providing means for performing the method.

Such a system may be a CAD system. The system may also be a CAE and/or CAM system, and the CAD modeled object may also be a CAE modeled object and/or a CAM modeled object. Indeed, CAD, CAE and CAM systems are not exclusive one of the other, as a modeled object may be defined by data corresponding to any combination of these systems.

The system comprises at least one a virtual immersion interface for launching execution of the instructions, for example by a user (i.e. the physical designer). Notably, the virtual immersion interface may allow the physical designer to call the multi-selection via its body configuration, and also to make the instantiation of its hands interact with the virtual environment, notably with the object to be added to the multi-selection at step S30, via its body configuration. The virtual immersion interface may for example comprise detectors for detecting the body configuration, notably the configuration of the arms and/or hands of the physical designer, and/or detectors for detecting the position of the arms and/or hands of the physical designer, e.g. optical detectors or movement detectors or sensors attached to the physical designer's body (e.g. the arms of the designer). In an example, the virtual immersion interface may reproduce the configuration of the designer's arms and/or hands in the virtual environment (i.e. the instantiation of the hands of the designer perform the same thing as the designer actually performs in reality). This offers a high feeling of virtual immersion and facilitates design.

Also, the physical designer may be fully instantiated in the virtual environment (not just its hands). In such a case, the virtual immersion interface may also allow the physical designer to modify the position of its instantiation in the virtual environment. The virtual immersion interface may for example comprise detectors of the real position of the physical designer for translating it as a position in the virtual environment (the method may in this case comprise the physical designer evolving in a predefined space, e.g. a room), or a controller of the position operable by the physical designer.

Also, the virtual immersion interface may allow the representation (preferably 3D) to the physical designer of the plurality of objects at S10, and possibly also the representation of the virtual environment and/or a highlighted representation of the objects that belong to the multi-selection once the multi-selection is called at S20. The virtual immersion interface may for example comprise a plurality of screens surrounding the physical designer for said representation (e.g. screen on all walls of a room where the designer evolves), or virtual immersion glasses (i.e. glasses with a screen and with detectors of movements for adapting the image on the screen according to the head movement of the physical designer). Such a system is an efficient tool for 3D design in an immersive virtual environment.

Any 3D modeled object of the method (e.g. the one designed *in fine*) is 3D (i.e. three-dimensional). This means that the modeled object is defined by data allowing its 3D representation. A 3D representation allows the viewing of the representation from all angles. For example, the modeled object, when 3D represented, may be handled and turned around any of its axes, or around any axis in the screen on which the representation is displayed. This notably excludes 2D icons, which are not 3D modeled, even when they represent something in a 2D perspective. The display of a 3D representation facilitates design (i.e. increases the speed at which designers statistically accomplish their task). This speeds up the manufacturing process in the industry, as the design of the product is part of the manufacturing process.

FIG. 2 shows an example of the architecture of the system as a client computer system, e.g. a workstation of a user.

The client computer comprises a central processing unit (CPU) 1010 connected to an internal communication BUS 1000, a random access memory (RAM) 1070 also connected to the BUS. The client computer is further provided with a graphics processing unit (GPU) 1110 which is associated with a video random access memory 1100 connected to the BUS. Video RAM 1100 is also known in the art as frame buffer. A mass storage device controller 1020 manages accesses to a mass memory device, such as hard drive 1030. Mass memory devices suitable for tangibly embodying computer program instructions and data include all forms of nonvolatile memory, including by way of example semiconductor memory devices, such as EPROM, EEPROM, and flash memory devices; magnetic disks such as internal hard disks and removable disks; magneto-optical disks; and CD-ROM disks 1040. Any of the foregoing may be supplemented by, or incorporated in, specially designed ASICs (application-specific integrated circuits). A network adapter 1050 manages accesses to a network 1060. The client computer also comprises virtual immersion interface 1080 for the physical designer interact with the virtual environment in order to perform the method.

To cause the system to perform the method, it is provided a computer program comprising instructions for execution by a computer, the instructions comprising means for this purpose. The program may for example be implemented in digital electronic circuitry, or in computer hardware, firmware, software, or in combinations of them. Apparatus of the invention may be implemented in a computer program product tangibly embodied in a machine-readable storage device for execution by a programmable processor; and method steps of the invention may be performed by a programmable processor executing a program of instructions to perform functions of the invention by operating on input data and generating output. The instructions may advantageously be implemented in one or more computer programs that are executable on a programmable system including at least one programmable processor coupled to receive data and instructions from, and to transmit data and instructions to, a data storage system, at least one input device, and at least one output device. The application program may be implemented in a high-level procedural or object-oriented programming language, or in assembly or machine language if desired; and in any case, the language may be a compiled or interpreted language. The program may be a full installation program, or an update program. In the latter case, the program updates an existing CAD system to a state wherein the system is suitable for performing the method.

An immersive virtual environment (also designated as "scene" in the following) designates a computer-simulated environment where objects (at least one) are simulated to a physical designer (i.e. a user, or, in other words, a person using the system, willing to perform design with the system) as if they were in the real world (i.e. the representation to the designer of the objects ensures such a simulation). For example, the system may be adapted to represent objects to the designer surrounding him at any angle between 0° and 360° with respect to a reference. This is known per se, but as an example, the system may comprise displaying objects on walls of a dedicated room, or using a pair of virtual immersion glasses, as discussed above. This excludes a representation on a single 2D screen, as traditionally used in CAD.

In the case of the method, at least the hands of the physical designer (and also possibly the whole body of the physical designer) are instantiated in the virtual environment, implying that among the data constituting the virtual environment, some of the data are associated to the physical designer's hands. Indeed, by "instantiating" the hands of the physical designer in the virtual environment, it is meant that the method defines data designating a geometry in the virtual environment that corresponds to the physical designer's hands. Thus, the physical designer may move such hands' instantiation in the virtual environment and possibly interact with the virtual environment.

The method, which may be triggered at any time, starts by representing S10 the plurality of objects in the virtual environment to the physical designer. The represented objects are thus instantiated as well in the virtual environment. The plurality of objects may comprise any mechanical product, such as a tool to be used for 3D design on a product under construction (for example a cutting tool), or a part that the physical designer wants to assemble to a product under construction. Instantiating an object means, as known from the field of computer science, loading a version of the object in the virtual environment and having said version available for use. The virtual environment and the plurality of objects are typically continuously displayed to the physical designer as the physical designer performs design, and, in an example, navigates/moves in the virtual environment (in such a case, the representations are updated according to the position of the designer in the virtual environment).

The physical designer may then call S20 a multi-selection. A multi-selection is a concept widely known in computer-science. Calling a multi-selection consists of making a set of objects among the plurality of represented objects available for performing a grouped action on them. Allowing for the multi-selection of objects makes the system more flexible and user-friendly. This speeds up design. In the case of the method, the multi-selection may be in examples a previously saved selection or a newly created selection (thus a void multi-selection, i.e. with no objects in it yet). In the case the system provides for calling a previously saved multi-selection, the system facilitates the designer's work, by making available previous work at a later time.

The call of the multi-selection at S20 is performed upon the detection of a body configuration of the physical designer (called "first body configuration" for the sake of differentiating it from the other body configuration involved in step S30, i.e. the "second body configuration", which may be a different one from the first body configuration). In other words, the physical designer physically achieves a specific body configuration. For example, the physical designer may take at least one specific posture (i.e. a static position) and/or perform at least one specific dynamic gesture (a dynamic movement of the designer). The system may then detect said first body configuration (e.g. via detectors of the virtual immersion interface, as discussed above) and perform the call S20 of the multi-selection upon such detection. Performing such a call via a body configuration (rather than e.g. via a haptic device) facilitates design notably by enhancing the feeling of immersion.

Now, after it has been called at S20, the multi-selection may serve different purposes. In the case of the example of the method, the user adds (S30) an object (one object of the represented plurality of objects) to the multi-selection. Of course, at this point the user may as well, similarly to what is going to be discussed next, draw an object out of the multi-selection, duplicate the multi-selection, or move the multi-selection to another spot. The adding S30 of an object is performed upon detection of a second body configuration. Here again, the physical designer physically achieves a specific body configuration (e.g. different from the first body configuration). For example, the physical designer may take at least one specific posture (i.e. a static position) and/or perform at least one specific dynamic gesture (a dynamic movement of the designer). The system may then detect said second body configuration (e.g. via detectors of the virtual immersion interface, as discussed above) and perform the adding S30 upon such detection. Performing such addition via a body configuration (rather than e.g. via a haptic device) facilitates design notably by enhancing the feeling of immersion.

In addition, the system provides for the designer interacting with the objects (notably the one to be added) via the designer's hands' instantiation in the virtual environment. In other words, the designer may make the instantiation of its hands interact with the representation of the objects. The interaction is precisely controlled by the second body configuration of the physical designer. Preferably, in order to make the immersion more realistic, the second body configuration may be a configuration of at least one of the physical hands of the designer. The designers thus has the feeling of interacting with the object in reality, making the addition S30 easier.

By providing 3D design in an immersive virtual environment, the method provides an environment that facilitates design compared to classical solutions based on a 2D screen. The immersion offers a new paradigm adapted for speeding up the work of designers. In this context, the method offers an efficient way to perform a multi-selection, e.g. add an object to a multi-selection., such multi-selection being an important tool for design. Now, because the actions of the multi-selection are controlled by the body configurations of the physical designer, the second body configuration controlling an instantiation of the designer's hands in the virtual environment, the method and system are particularly flexible, efficient and easy to use for the designer. The designer performs design with a deep feeling of immersion, and this considerably speeds up his actions.

While keeping the first body configuration, the step of adding S30 an object to the multi-selection may be repeated. Indeed, the multi-selection may be workable only when the first body configuration is detected, the end of such detection (e.g. because the designer leaves the first body configuration) implying the end of the multi-selection being provided for modulation. In such a case, keeping the first body configuration may allow the addition of more than one object to the multi-selection. This may efficiently be performed by repeating the second body configuration in a way to make the instantiation of the hands of the physical designer interact with each of the objects foreseen to be added to the multi-selection. The examples of specific body configurations provided later are particularly efficient for achieving the above functionalities of the system.

As for what can be discussed now, it can be said that in an example the physical designer achieves the first body configuration with one hand and the second body configuration with the other hand. Indeed, as discussed earlier, the first body configuration and/or the second body configuration may be achieved with the hands of the designer (in other words, the first and/or second body configuration is a specific configuration of at least one hand of the designer). This makes the system particularly ergonomic and enhances immersion. Now, for facilitating the example of the method where the adding S30 is repeated, the system may ensure that the designer can use both hands. As a consequence, the designer may achieve the first body configuration with one hand and the second body configuration with the other hand, so as to efficiently use both hands for performing the design. The system may also be adapted to detect the first body configuration only when a specific designated hand achieves it (e.g. the left hand or the right hand) and to detect the second body configuration only when the other hand achieves it. This ensures differentiation between the body configurations and robustness of the method. Alternatively, the method may be flexible and allow the achievement of the first and second body configurations with any of the two hands, as long as they are not the same hand for the two body configurations for the purpose of the example now discussed.

As discussed earlier, the multi-selection may be used for different purposes, such as duplication of the mutli-selection (e.g. in order to increase the number of available objects in the virtual environment). For example, the method may comprise, while keeping the first body configuration (and thus keeping the multi-selection active), performing a drag-and-drop with a grab-and-relax gesture with the other hand, thereby duplicating the multi-selection. In other words, the physical designer may perform a grab gesture with the hand not performing the first body configuration, then possibly move this second hand, and then relax it. The system may be adapted to interpret such series of actions as an instruction to duplicate the multi-selection, possibly positioning the duplicate at the last spot reached by the second hand when it was relaxed, and thus execute such instructions.

The method may similarly comprise performing a drag-and-drop with a grab-and-relax gesture with the other hand (the one not achieving the first body configuration), but this time after or while leaving the first body configuration. The system may be adapted to interpret it as an instruction to move the multi-selection (to the spot reached in the end by the other hand, i.e. the one performing the grab-and-relax gesture) and execute such instruction. In this case, the grab-and-relax may be performed at most shortly (i.e. after a shortly predetermined duration) after leaving the first body configuration (or while it is leaved, i.e. the first body configuration is left while the drag-and-drop is performed), for example, with less than 2 seconds elapsed.

As for the first body configuration, it may be a closed fist position. In other words, the designer achieves the first body configuration by closing a fist (e.g. with the hand designated for detection of the first body configuration should it be the case). The second body configuration (for interacting with an object to add at S30 to the multi-selection) may be a pinch gesture. In other word, the designer may simply pinch an object that it wants to add to the multi-selection (e.g. with the hand not keeping the first body configuration, or e.g. with the hand designated for the second body configuration, should it be the case). A pinch gesture may consist of touching one's thumb with (at least one of) the other fingers for less than a second. Together with the grab-and-relax gesture, the closed fist position gesture and the pinch gestures are easy to perform, intuitive, and easy to detect and to distinguish. The system is thus in such an example particularly efficient and fast for design. It is noted that how to detect these body configurations is not the purpose of the present discussion and can be performed by any method known *per se.*

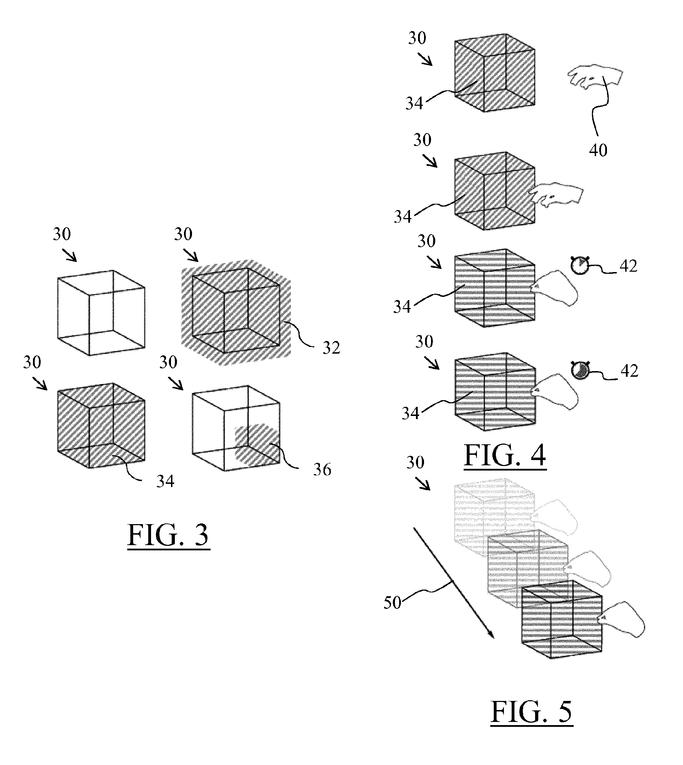

Examples of using the system and the method are now discussed reference to FIGS. 3-27.

In the examples, both hands of the user have the same capabilities and the machine responds similarly for a same gesture even if executed with different hands. Examples given with the right or the left hand could be the exact symmetric and work the same way. Also, in these examples, timings are given only as non-limiting characteristics and can be modified. The pickable zone (discussed below) of the objects is the geometry of the objects displayed to the designer.

Some definitions applicable to the examples and to the discussion above are now provided.

The notion of pickable zone is now explained. The pickable zone of an object is the zone of the virtual environment where it can be picked, i.e. where an interaction of the instantiation of the hands of the designers achieves picking (e.g. for addition to the multi-selection or removal from it, or moving the object, or duplicating it). The pickable zone of an object can be its geometry but this zone can also be restricted or extended, and even have a different geometrical shape. FIG. 3 presents different versions of an object which is cube 30. The pickable zone is represented as the shading zone which can correspond to the object geometry 34, an extended version of it 32, or a restricted version of it 36.

The grab gesture is now explained. A user can grab (a grab gesture being detected when the tip of the thumb is in contact with the tip of any other finger, e.g. the third phalanx, for at least 1 second on the pickable zone of an object of the virtual environment) a multi-selection of objects, move the multi-selection according to the position of his hand while it is grabbed and drop them anywhere he likes once he releases his grab (the tip of the thumb is no more in contact with the tip of any other finger at this point). A grabbed object may provide a feedback to the user. FIG. 4 represents the virtual environment and the instantiation 40 of a hand of the designer performing a grab-and-relax gesture in four steps, from up to down on the figure. The hand is first relaxed. Then it approaches the pickable zone 34 of cube 30 here corresponding to the geometry of the object. Then the grab gesture is performed. The last picture shows that the grab is maintained for a period of time above the threshold, which period of time is represented by time elapsed on chronometer 42 (chronometer 42 may be not displayed to the designer, but is represented on the figures only for the sake of illustrating the explanations). FIG. 5 shows the movement of the object according to arrow 50 when the grab gesture is performed and the instantiation 40 of the hand is moved. A pinch gesture is a grab gesture performed for less than 1 second. With the grab gesture, the user can grab objects and move them. The grab gesture is used for direct action, pinch is used for designation (e.g. adding an object to the multi-selection). The delay time indicated here (1 second) can be adapted at will by the user and is just an example. If the user wants to grab and move simultaneously multiple objects, the method provides for calling S20 the multi-selection, e.g. with a multi-selection gesture.

The multi-selection gesture may be obtained when one hand is in a closed fist position. The first effect is the display of the previously saved selection for at least 2 seconds (the delay time indicated here can be adapted at will by the user and is just an example). The user can perform actions on the multi-selection when the multi-selection gesture is active. When the multi-selection gesture stops, the saved selection stays available for a particular set of actions during 2 seconds. The previously saved selection can be empty or consisting of a selected collection of objects (from one to all) inside the scene.

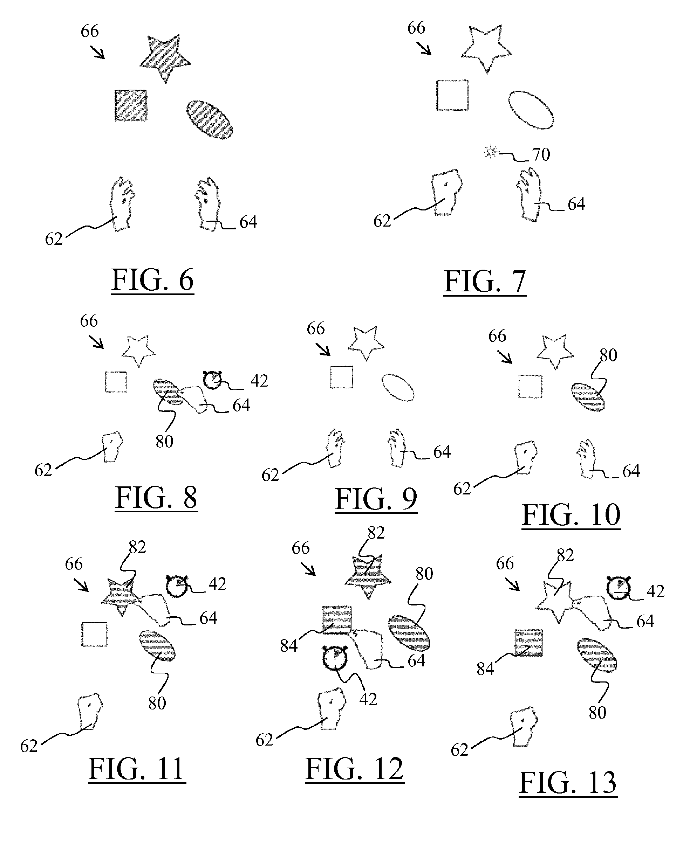

FIG. 6 shows the instantiations 62 and 64 of the hands of the designer and a plurality 66 of objects represented in the virtual environment. The pickable zone are shown on the figure in shadings for the sake of convenience. The designer may then call the multi-selection by performing the multi-selection gesture by closing a fist. As shown on FIG. 7, this may be reproduced in the virtual environment by instantiation 62 of the corresponding hand of the designer being closed in the virtual environment. In the case of the example of FIG. 7, there is no previously saved multi-selection such that a new void multi-selection is created. A symbol 70 can be displayed to provide feedback to the designer and indicate such state of facts to the designer.

Once the multi-selection has been called at S20 according to any of the examples provided above, different actions may be performed. These actions are discussed below.

First, the multi-selection may be edited. The multi-selection gesture may be combined with the pinch gesture of the other hand, thus adding objects to the multi-selection (which is saved as modified) if the objects do not belong to it yet. If an object is already part of the multi-selection, the pinch gesture may remove the object from it. At each edition of the multi-selection, the modified multi-selection is saved.

FIGS. 8-16 show such a scenario in a chronology, after the scenario presented with reference to FIGS. 6-7. As shown on FIG. 7, the designer has called a newly created empty multi-selection. As shown on FIG. 8, while keeping the multi-selection body configuration with left hand 62, the designer performs a pinch gesture with right hand 64 on the pickable zone of object 80 of the plurality 66 of represented objects. As discussed above, the pinch gesture of the example is characterized by a duration of the closed state of the hand inferior to 1 second. As shown on FIG. 9, the designer may then put both hands 62 and 64 at rest, leaving the first and second body configurations. None of the plurality 66 of objects is thus active, the multi-selection being uncalled. As shown on FIG. 10, the designer may perform the multi-selection gesture again with left hand 62. This makes the previously saved multi-selection, consisting of object 80, active, which is represented by objects of the multi-selection being shaded on the figure (here, object 80 only is shaded). As shown on FIG. 11, as explained with reference to FIG. 8, the designer may perform the pinch gesture on object 82, thereby adding it to the multi-selection, now consisting of objects 80 and 82. As shown on FIG. 12, the designer may add object 84 the same way. Then, as shown on FIG. 13, the designer may remove object 82 from the multi-selection by performing the pinch gesture on it for the second time. This is represented by the shadings of object 82 being removed on the figure. On

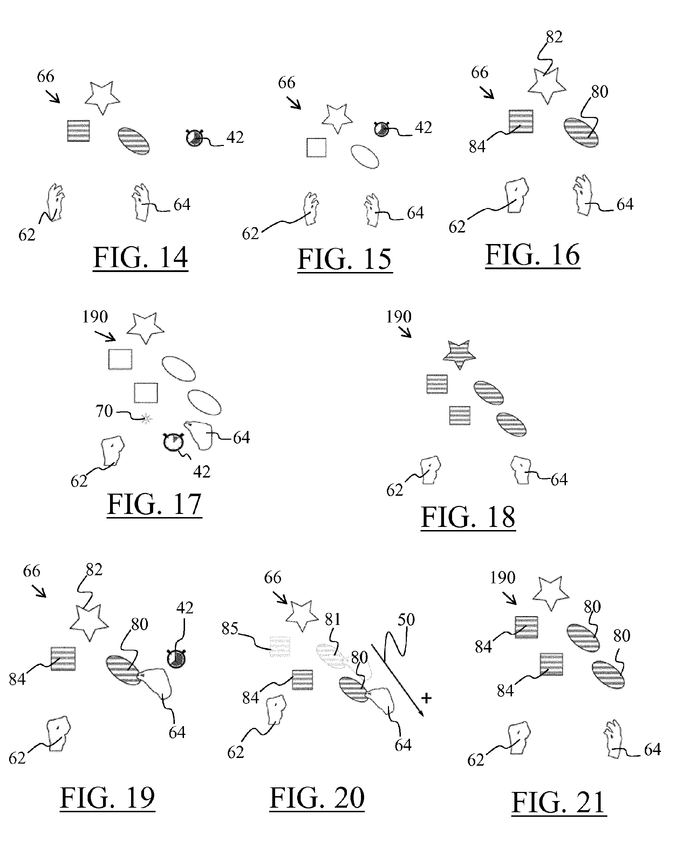

FIG. 14, the designer has put both right hand 64 and also left hand 62 at rest. The current multi-selection remains active for e.g. 2 seconds. FIG. 15 shows that the multi-selection is no more active after 2 seconds have elapsed (the objects of the multi-selection are not shaded anymore). As shown on FIG. 16, performing the multi-selection gesture again (here with left hand 62) calls the multi-selection again.

The system may provide for additional edition capabilities. In an example shown on FIG. 17, if the designer makes a pinch gesture with right hand 64 while the multi-selection is kept active by left hand 62 making the closed fist gesture, the saved selection may become empty (shadings are gone on FIG. 17). In another example, if the designer makes a multi-selection gesture with both hands simultaneously, as shown on FIG. 18, all the pickable elements 190 of the scene may be selected and therefore added to the saved multi-selection.

Second, the multi-selection may be duplicated. The user may grab with his other hand the saved selection and move it, the system providing for thereby performing a duplication of the saved selection. The previously saved selection may stay at its place while a duplicated instance of it is displayed like it would be if it was grabbed by the hand. According to the rules of the design space (interference of objects authorized or not for instance), when the user drops the duplicated instance of the saved selection, the duplicate is added to the saved selection and the duplicated objects are added to the 3D scene. If the user stops the multi-selection gesture while performing a duplication, the action may be brought to a simple move of the multi-selection, as discussed later. However, reactivating the multi-selection gesture while the grab gesture is still active may perform the duplication.

FIGS. 19-21 show such a scenario in a chronology, after the scenario presented with reference to FIGS. 6-16. As shown on FIG. 16, the designer has performed the multi-selection gesture with left hand 62, thereby calling multi-selection consisting of objects 80 and 84. As shown on FIG. 19, the designer may then perform a grab gesture with right hand 64 (e.g. for more than a second), while keeping the multi-selection gesture with left hand 62. The grab gesture may be performed on an object of the multi-selection (as in the example of the figure, where the grab gesture is performed on object 80), or anywhere in the virtual environment. As shown on FIG. 20, the user may then move right hand 64 according to arrow 50, thereby moving the multi-selection as explained with reference to FIG. 5. The phantom of the multi-selection may be represented to the designer, e.g. as shade (shades 85 and 81 of objects 84 and 80 respectively on the figure). Then, when the user releases right hand 64, as shown on FIG. 21, the duplication is performed. The new multi-selection 190 thus consists of two instances of object 84 and two instances of object 80.

Third, the multi-selection may be simply moved. Indeed, the system may provide for the multi-selection being manipulated like a unique object if the user performs a grab gesture with his other hand on any of the selected object. The saved selection while follow the same principle of a regular grab, as explained with reference to FIG. 5, but instead multiple objects can be manipulated.

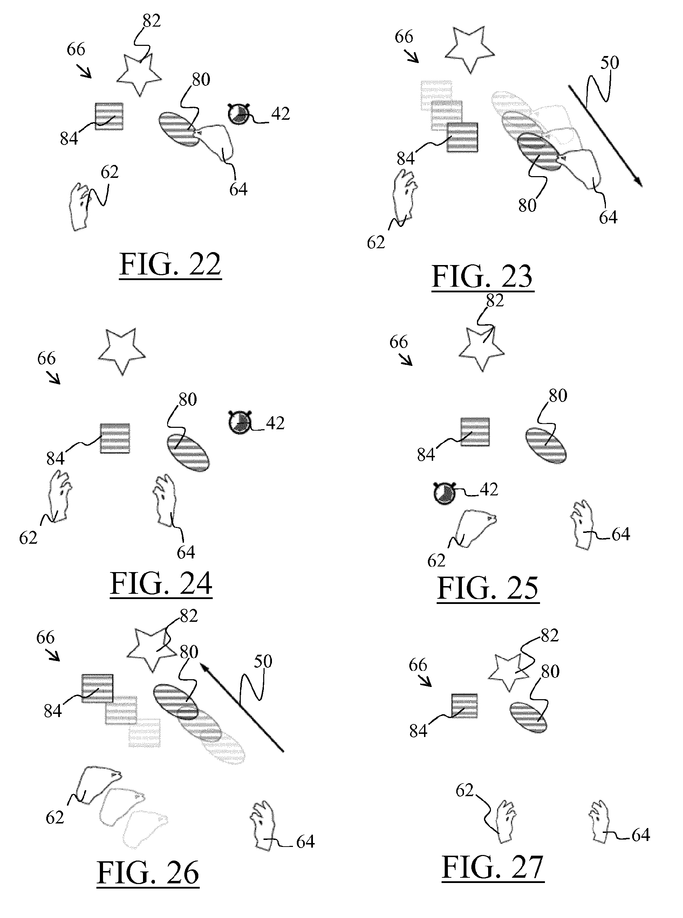

FIGS. 22-24 show such a scenario in a chronology, after the scenario presented with reference to FIGS. 19-21.

As shown on FIG. 22, objects 80 and 84 belong to the called multi-selection. The user performs the grab gesture on object 80 with right hand 64 and relaxes (i.e. puts at rest, i.e. releases) right hand 62 (the one having performed the multi-selection gesture). Then, as shown on FIG. 23, the user moves right hand 64 according to arrow 50. Objects 80 and 84 of the multi-selection are moved, leaving a trace as shown on the figure. As shown on FIG. 24, when right hand 64 is relaxed, objects 80 and 84 have moved to a new position.

Fourth, the system may be adapted to provide a so-called "power move". The system may be adapted so that the power move can only be activated by the hand which last performed the multi-selection gesture. It allows the user to grab and move the multi-selection without being in the pickable zone of any of the selected object (to the difference of the simple move of the multi-selection of the previous example). The power move thus simplifies the move of the multi-selection.

FIGS. 25-27 show such a scenario in a chronology, after the scenario presented with reference to FIGS. 22-24.

As shown on FIG. 25, the user performs the grab gesture with left hand 62 (i.e. the hand having last performed the multi-selection gesture) outside any pickable zone of any represented object of the virtual environment. Then, as shown on FIG. 26, the user moves left hand 62 (the one performing the grab gesture) according to arrow 50. Upon relaxation of left hand 62 (the one having performed the grab gesture and the move), objects 80 and 84 (and only them) of the multi-selection have moved according to the move of left hand 62.

The above scenario and functionalities are provided as non-limiting examples. Further developments are within the scope of the method and system. Notably, the system may be adapted so that each hand could save its own selection. Also, the system may be adapted so that only one hand could perform the multi-selection, which would result in a drastic increase the number of combinations of possible gestures.

## Claims

1. Computer-implemented method of three-dimensional (3D) design in an immersive virtual environment, wherein the method comprises the steps of:
representing (S10) a plurality of objects in the virtual environment to a physical designer, at least the hands of the physical designer being instantiated in the virtual environment;
calling (S20) a multi-selection, upon detection of a first body configuration of the physical designer; and
adding (S30) an object to the multi-selection, upon detection of a second body configuration of the physical designer, the second body configuration controlling an interaction of the instantiation of the hands of the physical designer with the object.

2. The method of claim 1, wherein the multi-selection is a previously saved selection or a newly created selection.

3. The method of claim 1 or 2, wherein, while keeping the first body configuration, the step of adding an object to the multi-selection is repeated.

4. The method of claim 1, 2 or 3, wherein the physical designer achieves the first body configuration with one hand and the second body configuration with the other hand.

5. The method of claim 4, wherein the method further comprises, while keeping the first body configuration, performing a drag-and-drop with a grab-and-relax gesture with the other hand, thereby duplicating the multi-selection.

6. The method of claim 4 or 5, wherein the method further comprises, after or while leaving the first body configuration, performing a drag-and-drop with a grab-and-relax gesture with the other hand, thereby moving the multi-selection.

7. The method of any of claims 4-6, wherein the first body configuration is a closed fist position and/or the second body configuration is a pinch gesture.

8. Computer program comprising instructions for performing the method of any of claims 1-7.

9. Data storage medium having recorded thereon the computer program of claim 8.

10. A CAD system comprising a processor coupled to a memory and a virtual immersion interface, the memory having recorded thereon the computer program of claim 8.
